# FASCICULE DE BREVET EUROPEEN

(11) **EP 3 162 019 B1**
(45) Date de publication et mention de la délivrance du brevet: **25.03.2020**
(21) Numéro de dépôt: 15733837.7
(22) Date de dépôt: 15.06.2015
(51) Int. Cl.: H04L 29/06, H04W 4/12

(54) **PROCÉDÉ ET DISPOSITIF D'ÉTABLISSEMENT D'UNE COMMUNICATION**
VERFAHREN UND VORRICHTUNG ZUR HERSTELLUNG EINER KOMMUNIKATION
METHOD AND DEVICE FOR ESTABLISHING A COMMUNICATION

(30) Priorité: 30.06.2014 FR 1456121
(43) Date de publication de la demande: 03.05.2017
(73) Titulaire: Orange, 75015 Paris (FR)
(72) Inventeur: BOUVET, Bertrand, F-22700 Perros Guirec (FR); FAUCHOUX, Fabrice, F-22700 Louannec (FR); SALOU, Catherine, F-22300 Lannion (FR); PIRIO, Mathieu, Lexington, MA 02420 (US); MONCOMBLE, Ghislain, F-22310 Plestin Les Greves (FR)
(86) Numéro de dépôt international: PCT/FR2015/051580
(87) Numéro de publication internationale: WO 2016/001504

(56) Documents cités:
- WO-A1-2011/124760
- DE-A1-102006 057 817
- V1 Gsm Association: "GSM Association Non Confidential Official Document RCS 5.1: Services and Client Specification Rich Communication Suite 5.1 Advanced Communications Services and Client Specification Security Classification", , 13 août 2012 (2012-08-13), pages 1-100, XP055122342, Extrait de l'Internet: URL:http://www.gsma.com/network2020/rcs/sp ecs-and-product-docs/ [extrait le 2014-06-10]
- NSN ET AL: "(Compromising) WLAN IW Solution for UEs with and without ANDSF", 3GPP DRAFT; R2-132327 (WLAN-3GPP SOLUTION), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Barcelona, Spain; 20130819 - 20130823 9 août 2013 (2013-08-09), XP050718106, Extrait de l'Internet: URL:http://www.3gpp.org/ftp/tsg_ran/WG2_RL 2/TSGR2_83/Docs/ [extrait le 2013-08-09]

## Description

Aujourd'hui, un utilisateur appelant et un utilisateur appelé peuvent communiquer via leurs terminaux respectifs selon différents modes de communication tels qu'une communication téléphonique, une communication visiophonique, une communication par messages textes ou multimédia (SMS pour Short Message Service en anglais), ou MMS (pour Multimedia Message Service en anglais) ou encore IM (pour Instant Messaging en anglais), une communication de type tableau blanc, etc...

Pour mettre en œuvre un mode de communication particulier, par exemple une communication visiophonique, le terminal de l'utilisateur appelant et le terminal de l'utilisateur appelé peuvent disposer de plusieurs services de communication disponibles offrant ce mode de communication particulier. De tels services de communication sont disponibles en fonction de la connectivité du terminal de l'utilisateur appelant, respectivement du terminal de l'utilisateur appelé, à un réseau de communication d'un opérateur auprès duquel l'utilisateur du terminal appelant, respectivement l'utilisateur du terminal appelé, est abonné.

Par exemple, un service de communication utilisé pour envoyer une demande de communication à destination d'un terminal de l'utilisateur appelé est différent selon le type de réseau auquel le terminal de l'utilisateur appelant est connecté, tels que par exemple un réseau 2G, EDGE, 3G ou encore 4G, ou autre pour un réseau d'accès mobile ou un réseau WIFI, ADSL, VDSL, Fibre, Câble, Lifi ou autre pour un réseau d'accès fixe.

Ainsi, par exemple, une communication en mode visiophonie peut être établie entre le terminal de l'utilisateur appelant et le terminal de l'utilisateur appelé via un service de communication fourni par les opérateurs de ces terminaux lorsque les terminaux sont connectés à un réseau mobile 4G. Dans ce cas, le service de communication est mis en œuvre sur chaque terminal par une application de communication native du terminal. En général, l'activation de l'application de communication native du terminal de l'utilisateur appelant est faite grâce à un bouton physique dédié disposé sur le terminal de l'utilisateur appelant ou grâce à un bouton tactile affiché sur une interface du terminal de l'utilisateur appelant. Lorsque l'utilisateur appelant appuie ou clique sur un tel bouton pour déclencher l'envoi d'une demande de communication, le service de communication utilisé pour initier la demande de communication dépend du réseau de communication auquel le terminal de l'utilisateur appelant est connecté. Dans certains cas, par exemple si l'utilisateur appelant déclenche une demande de communication en mode visiophonie vers le terminal de l'utilisateur appelé et que le terminal de l'utilisateur appelant ou le terminal de l'utilisateur appelé est connecté à un réseau de communication 2G ne fournissant pas de service de visiophonie, la demande de communication peut échouer sans que l'utilisateur appelant ne comprenne la raison de l'échec. Ce qui peut créer une frustration de l'utilisateur appelant dans son utilisation du service de communication.

Lorsque la demande de communication émise par le terminal de l'utilisateur appelant aboutit, la qualité de la communication établie peut aussi être dépendante du réseau de communication auquel le terminal de l'utilisateur appelant est connecté et/ou du réseau de communication auquel le terminal de l'utilisateur appelé est connecté. Dans l'exemple précédent, dans le cas où le terminal de l'utilisateur appelant et le terminal de l'utilisateur appelé sont connectés à un réseau de communication 4G, la communication établie en mode visiophonie dispose d'une qualité de service garantie fournie par le mécanisme de QoS (pour Quality of Service en anglais) spécifié par le 3GPP (pour Third Génération Partnership Project en anglais) et mis en œuvre par le réseau de communication 4G.

Il n'en va pas de même lorsque le terminal de l'utilisateur appelant ou le terminal de l'utilisateur appelé est connecté à un réseau de communication ne fournissant pas de qualité de service garantie.

Par exemple, la communication en mode visiophonie peut également être établie sur un réseau mobile 3G via un service de visiophonie selon le standard RCS (pour Rich Communication Suite en anglais) lorsque le terminal de l'utilisateur appelant et le terminal de l'utilisateur appelé disposent tous les deux de l'application RCS correspondante. Dans ce cas, la qualité de service de la communication établie en mode visiophonie ne peut pas être garantie car le service de visiophonie RCS fonctionne sur un réseau de données IP (pour Internet Protocol en anglais) fonctionnant dans un mode connu dit « Best Effort ». Le standard RCS est décrit, entre autres, dans le document, publié par la Gsm Association: "GSM Association Non Confidential Officiai Document RCS 5.1 : Services and Client Spécification Rich Communication Suite 5.1 Advanced Communications Services and Client Spécification Security Classification" du 13 août 2012. Lorsque le terminal de l'utilisateur appelant et le terminal de l'utilisateur appelé sont compatibles avec le standard RCS, une information est affichée dans le répertoire natif du terminal appelant en association avec les informations de contact de l'utilisateur appelé. Cette information permet d'indiquer à l'utilisateur appelant qu'il peut utiliser le standard RCS pour établir une communication. Dans cet exemple, l'utilisateur appelant dispose alors de plusieurs informations lui indiquant qu'il peut établir une communication via différents services de communication.

La communication en mode visiophonie peut également être établie entre le terminal de l'utilisateur appelant et le terminal de l'utilisateur appelé via un service de communication fourni par un fournisseur de services tiers à partir d'une application préalablement téléchargée et installée sur chacun des terminaux. Ce type d'applications est en général fourni par des fournisseurs de services , dit OTT (pour Over The Top en anglais), ne disposant pas d'infrastructure de réseaux de communications. Ces fournisseurs de services OTT fournissent alors des services de communication via un réseau de données IP basé sur une infrastructure gérée par un opérateur de réseau de communication.

En général, une application de communication fournie par un fournisseur de services OTT et installée sur un terminal d'un utilisateur peut insérer dans le répertoire natif du terminal des informations relatives aux contacts qui sont contenus dans le répertoire et qui peuvent être contactés via l'application de communication fournie par le fournisseur de services OTT.

Compte tenu du nombre relativement élevé d'applications de communication ainsi disponible dans un terminal, un utilisateur appelant qui souhaite communiquer avec un utilisateur appelé doit alors choisir à partir de quelle application de communication il souhaite demander l'établissement d'une communication. Un tel choix peut avoir un impact sur la qualité de service de la communication qui sera établie et les services disponibles au cours de la communication. L'utilisateur appelant n'a pas forcément connaissance de l'application fournissant la meilleure qualité de service à l'instant où il initie la demande de communication.

Un tel choix peut aussi avoir un impact sur l'aboutissement de la demande de communication si l'utilisateur appelant choisit une application de communication qui est installée sur le terminal de l'utilisateur appelé mais qui n'est pas exécutée par le terminal de l'utilisateur appelé ou une application de communication pour laquelle le terminal de l'utilisateur appelé ne s'est pas enregistré dans le réseau de communication.

Un des buts de l'invention est d'apporter des améliorations par rapport à l'état de la technique.

Elle propose à cet effet un procédé d'établissement d'une communication entre au moins un terminal appelant et un terminal appelé selon la revendication 1.

L'invention permet ainsi à un terminal appelant de déclencher une demande de communication à destination d'un terminal appelé selon un service de communication déterminé en fonction du contexte de communication du terminal appelé et du contexte de communication du terminal appelant. L'utilisateur du terminal appelant n'a ainsi pas besoin de se soucier du service de communication à sélectionner ou de l'application de communication à activer pour établir une communication avec le terminal appelé.

Le procédé selon l'invention s'applique au cas où la demande d'établissement de communication est faite pour un mode de communication prédéterminé, par exemple si l'utilisateur du terminal appelant sélectionne un mode de communication visiophonique ou audiophonique.

Le procédé selon l'invention s'applique également au cas où la demande d'établissement de communication est faite pour plusieurs modes de communication, par exemple si l'utilisateur du terminal appelant sélectionne le terminal appelé mais ne précise pas de mode de communication. Dans ce cas, au cours de la détermination du service de communication le mode de communication selon lequel la communication sera établie est également déterminé. Les différents modes ou caractéristiques de réalisation mentionnés ci-après peuvent être ajoutés indépendamment ou en combinaison les uns avec les autres, aux caractéristiques du procédé défini ci-dessus.

Selon un mode particulier de réalisation de l'invention, l'information de contexte de communication relative au terminal appelant comprend au moins une des trois informations suivantes :
- une information indiquant au moins un réseau de communication auquel le terminal appelant est connecté ou au moins un réseau de communication auquel le terminal appelant est apte à se connecter,
- une information indiquant au moins une application de communication apte à être utilisée pour établir ladite communication demandée,
- une information indiquant une capacité du terminal appelant telle que : caméra, microphone, capteurs, niveau courant de batterie, etc...

Selon un mode particulier de réalisation de l'invention, l'information de contexte de communication relative au terminal appelé comprend au moins une des trois informations suivantes :
- une information indiquant au moins un réseau de communication auquel le terminal appelé est connecté ou un réseau de communication auquel le terminal appelé est apte à se connecter,
- une information indiquant au moins une application de communication apte à être utilisée pour établir une communication avec le terminal appelé,
- une information indiquant une capacité du terminal appelé telle que : caméra, microphone, capteurs, niveau courant de batterie, etc...

Par contexte de communication d'un terminal, on entend notamment le type de connectivité du terminal, c'est-à-dire le ou les réseaux de communication auxquels le terminal est connecté ou est susceptible de se connecter, ou les applications de communication installées et exécutées sur le terminal. De telles applications de communication sont par exemple des applications de communication natives du terminal ou des applications de communication fournies par un fournisseur de services OTT. Une application de communication native d'un terminal est une application de communication installée par le constructeur du terminal et utilisant un service de communication fourni par un opérateur de réseau de communication auprès duquel l'utilisateur du terminal est abonné.

Selon les modes particuliers de réalisation de l'invention ci-dessus, le terminal appelant peut déterminer le service de communication à utiliser pour communiquer avec le terminal appelé en fonction du type de réseau de communication disponible entre les deux terminaux pour communiquer ou en fonction des applications de communication communes aux deux terminaux. Avantageusement, l'information de contexte de communication relative au terminal appelé est obtenue en provenance d'une plateforme de service auprès de laquelle le terminal appelant et le terminal appelé se sont enregistrés. Ainsi, le terminal appelant peut obtenir l'information de contexte de communication relative au terminal appelé lorsqu'il ne peut contacter directement le terminal appelé pour obtenir cette information, par exemple parce qu'une interopérabilité entre le terminal appelant et le terminal appelé concernant les échanges nécessaires à l'obtention d'une telle information n'a pas été définie.

Selon un autre mode particulier de réalisation de l'invention, l'information de contexte de communication relative au terminal appelé est obtenue en provenance du terminal appelé. Ce mode particulier de réalisation de l'invention nécessite une interopérabilité entre le terminal appelé et le terminal appelant concernant les échanges nécessaires à l'obtention de l'information de contexte de communication relative au terminal appelé. Un tel mode est moins couteux à mettre en œuvre car il évite la mise en place d'une plateforme de service liée à l'invention. Selon ce mode particulier de réalisation de l'invention, un message normalisé par un standard 3GPP et dédié à l'information de contexte de communication de l'invention peut par exemple être utilisé pour fournir une telle information de contexte.

Selon un autre mode particulier de réalisation de l'invention, lorsqu'au moins deux services de communication peuvent être mis en œuvre entre le terminal appelant et le terminal appelé, l'étape de détermination sélectionne parmi lesdits services de communication un service de communication fournissant la meilleure qualité de service. Selon ce mode particulier de réalisation de l'invention, la communication établie entre le terminal appelant et le terminal appelé bénéficie ainsi d'une qualité optimale en fonction des réseaux de communication auxquels le terminal appelant et le terminal appelé sont connectés.

Selon un autre mode particulier de réalisation de l'invention, lorsque le terminal appelant est connecté à un premier réseau de communication qui est différent d'un deuxième réseau de communication sur lequel le service de communication déterminé est mis en œuvre, il comprend une étape de connexion du terminal appelant au deuxième réseau de communication.

Dans ce mode particulier de réalisation de l'invention, le service de communication déterminé est mis en œuvre sur un réseau de communication auquel le terminal appelant est apte à se connecter mais n'est pas connecté au moment de la demande d'établissement de communication. Avantageusement, selon ce mode particulier de réalisation de l'invention, la connexion du terminal appelant est modifiée de sorte à établir une communication selon le service de communication déterminé.

Par exemple, le terminal appelant est connecté à un réseau de communication mobile de type 3G et est apte à se connecter à une borne d'accès WIFI à un réseau de communication IP fixe qui se trouve à proximité du terminal appelant. Selon cet exemple, le service de communication déterminé est un service de communication fourni par un fournisseur de services OTT utilisant un réseau de communication IP. Selon ce mode particulier de réalisation de l'invention, le terminal appelant se connecte alors à la borne d'accès WIFI du réseau de communication IP fixe.

Selon un autre exemple, le terminal appelant peut être connecté à un réseau de communication mobile 3G alors qu'il est apte à se connecter à un réseau de communication mobile 4G. Par exemple, la connexion au réseau de communication mobile 3G au lieu du réseau de communication mobile 4G a été imposée par une fonction de gestion de connexion au réseau de communication de l'opérateur du réseau de communication auprès duquel l'utilisateur du terminal appelant est abonné, telle que la fonction ANDSF (pour Access Network Discovery and Selection Function en anglais) définie par le standard 3GPP. Lorsque le service de communication déterminé est un service de communication utilisant le réseau de communication 4G, par exemple un service visiophonique ViLTE (pour Video over LTE en anglais, LTE pour Long Term Evolution en anglais) ou un service de communication audio VoLTE (pour Voice over LTE), ce mode particulier de réalisation de l'invention permet que le terminal appelant se connecte au réseau de communication 4G afin d'établir la communication demandée et de bénéficier de la qualité de service offerte par le réseau de communication 4G.

Conformément à l'invention, lorsque le terminal appelé est connecté à un troisième réseau de communication qui est différent d'un deuxième réseau de communication sur lequel le service de communication déterminé est mis en œuvre, il comprend une étape d'envoi à destination du terminal appelé d'une demande de connexion du terminal appelé au deuxième réseau de communication, de sorte que le terminal appelé se connecte au deuxième réseau de communication. Dans ce mode particulier de réalisation de l'invention, le service de communication déterminé est mis en œuvre sur un réseau de communication auquel le terminal appelé est apte à se connecter mais n'est pas connecté au moment de la demande d'établissement de communication. Avantageusement, selon ce mode particulier de réalisation de l'invention, la connectivité du terminal appelé est modifiée de sorte à établir une communication selon le service de communication déterminé.

Selon un autre mode particulier de réalisation de l'invention, lorsque la demande d'établissement de communication est effectuée pour au moins deux modes de communication, l'information de contexte de communication relative au terminal appelant comprend une information relative à un historique de communications préalablement établies entre le terminal appelant et le terminal appelé, dite information d'historique. Le procédé comprend alors une étape de détermination d'un mode de communication en fonction de ladite information d'historique. Le service de communication est alors déterminé pour le mode de communication déterminé.

Selon ce mode particulier de réalisation de l'invention, l'historique de communication comprend par exemple la fréquence de communications entre le terminal appelant et le terminal appelé ainsi que le mode selon lequel le terminal appelant et le terminal appelé ont l'habitude de communiquer. Le terminal appelant prend ainsi en compte la fréquence et le mode de communication avec lesquels le terminal appelant et le terminal appelé ont l'habitude de communiquer afin de déterminer le mode de communication selon lequel la communication sera demandée. Ce mode particulier de réalisation de l'invention permet d'augmenter les chances de succès que la demande de communication soit acceptée par le terminal appelé.

L'invention concerne également un terminal, dit terminal appelant, selon la revendication 5.

Les différents modes ou caractéristiques de réalisation mentionnés ci-après peuvent être ajoutés indépendamment ou en combinaison les uns avec les autres, aux étapes du terminal appelant défini ci-dessus.

Des exemples non revendiqués utiles à la compréhension de l'invention sont exposés ci-après. Un tel exemple porte sur un procédé de fourniture d'une information de contexte de communication relative à un premier terminal. Un tel procédé comprend :
- une étape de réception d'une demande d'information de contexte de communication relative au premier terminal, la demande ayant été envoyée par un deuxième terminal souhaitant établir une communication avec le premier terminal,
- une étape de fourniture au deuxième terminal de ladite information de contexte.

Un tel procédé de fourniture peut avantageusement être mis en œuvre par le premier terminal. Dans une telle variante, le premier terminal et le deuxième terminal peuvent communiquer, par exemple, selon le protocole SIP à l'aide de messages SIP dédiés à l'invention. Par exemple, la demande d'information de contexte relative au premier terminal peut être envoyée sous la forme d'un message SIP OPTIONS comprenant un champ dédié à l'invention. Selon cet exemple, le premier terminal peut fournir l'information de contexte de communication sous la forme d'un message de réponse SIP 200 OK.

Selon une deuxième variante, le procédé de fourniture est mis en œuvre par un dispositif de fourniture apte à communiquer avec le premier terminal afin d'obtenir l'information de contexte de communication relative au premier terminal.

Les différents modes ou caractéristiques de réalisation non revendiqués mentionnés ci-après peuvent être ajoutés indépendamment ou en combinaison les uns avec les autres, aux étapes du procédé de fourniture défini ci-dessus.

Selon un exemple, l'information de contexte de communication relative au premier terminal comprend une information relative à la connectivité du premier terminal.

Selon cet exemple, le premier terminal fournit ainsi au deuxième terminal une information indiquant le réseau de communication auquel le premier terminal est connecté et/ou une information indiquant le ou les réseaux de communication auxquels le premier terminal est apte à se connecter. Selon un autre exemple, ladite information de contexte de communication relative au premier terminal a été préalablement obtenue en provenance du premier terminal et sauvegardée par un dispositif de fourniture auprès duquel le premier terminal s'est préalablement enregistré.

Selon un autre exemple non revendiqué, le procédé de fourniture comprend une étape de réception, en provenance du premier terminal, d'une information de changement de contexte de communication relative au premier terminal et une étape de mise à jour de l'information de contexte de communication relative au premier terminal sauvegardée.

Selon cet exemple particulier, le premier terminal informe le dispositif de fourniture dès qu'un changement du contexte de communication relatif au premier terminal se produit. Un tel changement correspond par exemple à un changement relatif à la connectivité du premier terminal, par exemple suite à un changement de réseau de communication auquel le premier terminal est connecté ou à une forte variation de la bande passante du réseau de communication auquel le premier terminal est connecté. Le changement du contexte de communication relatif au premier terminal peut aussi correspondre à l'activation ou à la désactivation sur le premier terminal d'une application de communication installée sur le premier terminal. Le changement du contexte de communication relatif au premier terminal peut aussi correspondre à un seuil minimal de niveau de batterie ou bien encore à l'activation ou à la désactivation d'un capteur sur le premier terminal. Selon cet exemple particulier, le dispositif de fourniture dispose ainsi d'informations de contexte de communication relatives au premier terminal qui sont à jour.

Selon un autre exemple particulier, préalablement à l'obtention de l'information de contexte de communication relative au premier terminal, une demande d'enregistrement du premier terminal envoyée au dispositif de fourniture comprend un jeton de notification fourni par un serveur de notification dédié à un système d'exploitation du premier terminal. Selon cet exemple, l'obtention de l'information de contexte de communication relative au premier terminal est mise en œuvre par :
- une étape d'envoi au serveur de notification d'une demande d'information de contexte de communication relative au premier terminal, la demande d'information comprenant le jeton de notification,
- une étape de réception en provenance du premier terminal de l'information de contexte de communication relative au premier terminal.

Corrélativement, un exemple concerne également un dispositif de fourniture d'une information de contexte de communication relative à un premier terminal, comprenant :
- un module de communication apte à :
   ▪ recevoir une demande d'information de contexte relative au premier terminal, la demande ayant été envoyée par un deuxième terminal souhaitant établir une communication avec le premier terminal,
   ▪ fournir au deuxième terminal ladite information de contexte,
- un module de traitement apte à obtenir une information de contexte de communication relative au premier terminal,
- un module de stockage apte à sauvegarder l'information de contexte de communication relative au premier terminal.

Selon un exemple, un tel dispositif de fourniture est compris dans un serveur.

Un autre exemple concerne également un terminal de fourniture d'une information de contexte de communication relative audit terminal, comprenant :
- un module de communication apte à :
   ▪ recevoir une demande d'information de contexte relative audit terminal, la demande ayant été envoyée par un autre terminal souhaitant établir une communication avec ledit terminal,
   ▪ fournir à l'autre terminal ladite information de contexte,
- un module de traitement apte à obtenir une information de contexte de communication relative audit terminal.

Un exemple concerne aussi un message d'information de contexte de communication envoyé à destination d'un terminal appelant, comprenant au moins un champ de données comprenant une information de contexte de communication relative au terminal appelé, ladite information de contexte de communication permettant au terminal appelant de déterminer un service de communication à utiliser pour établir une communication à destination du terminal appelé.

Le message permet ainsi au terminal appelant d'obtenir une information de contexte de communication relative au terminal appelé.

Dans un mode particulier de réalisation de l'invention, les différentes étapes du procédé d'établissement d'une communication et de fourniture d'une information de contexte de communication sont mises en œuvre par des instructions de programmes d'ordinateurs.

En conséquence, l'invention vise aussi un programme d'ordinateur selon la revendication 6 sur un support d'informations, ce programme étant susceptible d'être mis en œuvre respectivement dans un terminal ou plus généralement dans un ordinateur, ce programme comportant des instructions adaptées à la mise en œuvre des différentes étapes des procédés qui viennent d'être décrits.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique ou électronique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé d'établissement d'une communication ou du procédé de fourniture d'une information de contexte de communication en question.

Les avantages du programme d'ordinateur comportant des instructions adaptées à la mise en œuvre des différentes étapes du procédé d'établissement d'une communication ou du procédé de fourniture d'une information de contexte de communication sont identiques à ceux présentés en relation avec le procédé en question selon l'un quelconque des modes particuliers de réalisation mentionnés ci-dessus.

### Liste des figures

D'autres avantages et caractéristiques de l'invention apparaîtront plus clairement à la lecture de la description suivante de modes de réalisation particuliers de l'invention, donnés à titre de simples exemples illustratifs et non limitatifs, et des dessins annexés, parmi lesquels:
- la figure 1 illustre un environnement de mise en œuvre de l'invention selon un mode particulier de réalisation de l'invention,
- la figure 2 illustre des étapes du procédé d'établissement d'une communication entre au moins un terminal appelant et un terminal appelé et des étapes du procédé de fourniture d'une information de contexte de communication relative au terminal appelé selon un mode particulier de réalisation de l'invention,
- la figure 3 illustre un dispositif apte à mettre en œuvre le procédé d'établissement d'une communication entre au moins un terminal appelant et un terminal appelé selon un mode particulier de réalisation de l'invention,
- la figure 4 illustre un dispositif apte à mettre en œuvre le procédé de fourniture d'une information de contexte de communication relative à un premier terminal selon un mode particulier de réalisation de l'invention,
- la figure 5 illustre un message comprenant une information de contexte de communication selon un mode particulier de réalisation de l'invention.

### Description d'un mode particulier de réalisation de l'invention

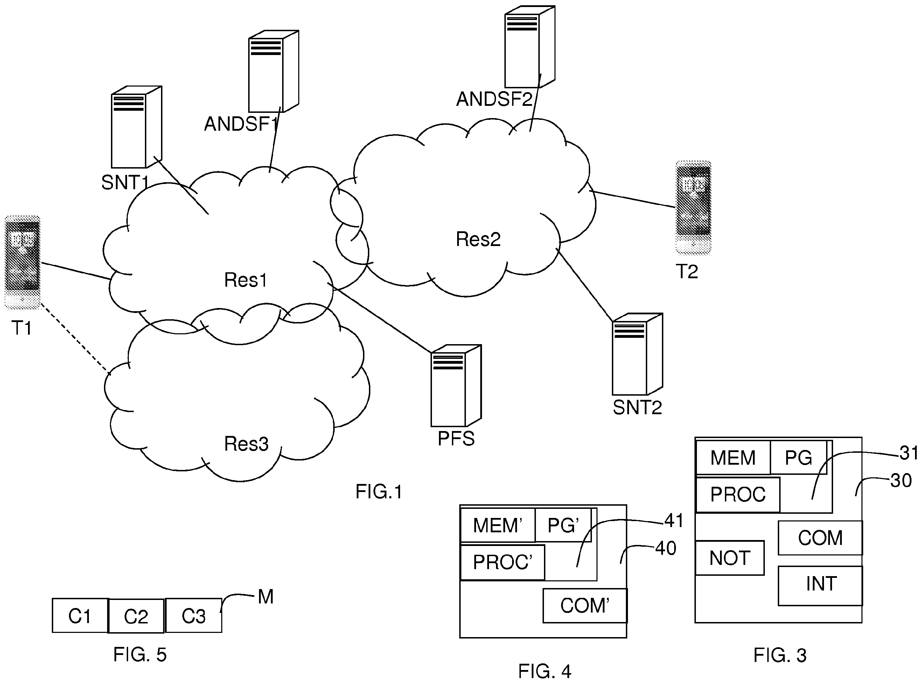

L'environnement décrit en figure 1 comprend un groupe de réseaux de communication Res1, Res2 et Res3 interconnectés entre eux par des serveurs d'interconnexion (non représentés). Les réseaux de communication Res1, Res2 et Res3 peuvent être gérés par un même opérateur de communication ou par différents opérateurs de communication. Les réseaux de communication Res1, Res2 et Res3 peuvent être tout type de réseaux de communication permettant d'échanger des données et d'établir des communications entre des terminaux connectés à l'un quelconque des réseaux de communication Res1, Res2 ou Res3.

Par exemple, le réseau de communication Res1 est un réseau de communications mobile de type GSM, EDGE, 3G, 3G+, fonctionnant en mode circuit pour l'établissement de communication voix. Le réseau de communication Res1 est par exemple basé sur une architecture RCS pour la transmission de données IP.

Le réseau de communication Res3 est par exemple un réseau de communications mobile de type 4G basé sur une architecture IMS (pour IP Multimedia Subsystem en anglais) ou un réseau de communication IP fixe utilisant un réseau d'accès WIFI.

Le réseau de communication Res2 est par exemple un réseau de communication mobile de type 4G basé sur une architecture IMS.

L'environnement de la figure 1 comprend aussi des terminaux T1 et T2 connectés respectivement au réseau de communication Res1 et au réseau de communication Res2.

Les terminaux T1 et T2 peuvent être tout type de terminaux permettant d'établir une communication téléphonique ou visiophonique, tels qu'un téléphone portable, un smartphone (téléphone intelligent en anglais), une tablette, une télévision connectée à un réseau de communication, un ordinateur personnel sur lequel une application de téléphonie, aussi appelé softphone, est installée, ou tout objet connecté à un réseau de communication.

Dans l'exemple décrit en figure 1, le terminal T1 est connecté au réseau de communication Res1 mais se trouve à proximité d'un point d'accès au réseau de communication Res3 et est apte à s'y connecter.

L'environnement de la figure 1 comprend aussi des serveurs de notification dédiés à un système d'exploitation d'un terminal, tel qu'en particulier le terminal T1 et/ou le terminal T2. De tels serveurs de notification permettent à un serveur d'un opérateur ou d'un fournisseur de service d'obtenir des informations relatives à un terminal supportant le système d'exploitation correspondant et de communiquer avec ce terminal pour lui notifier des informations ou des événements. Pour cela, un tel terminal envoie des informations au serveur de notification auquel il est associé, notamment des informations relatives au terminal et à aux applications installées sur ce terminal.

Pour que le serveur de l'opérateur ou du fournisseur puisse communiquer avec un tel terminal, une application dédiée à un tel serveur et installée sur le terminal envoie une requête de jeton au serveur de notification. Un tel jeton, appelé token en anglais, comprend un identifiant associant le terminal et l'application émettrice de la requête de jeton. Le serveur de notification envoie en retour au terminal le jeton comprenant l'identifiant. Le serveur de l'opérateur ou du fournisseur de service communique ensuite avec le terminal en envoyant des messages comprenant le jeton au serveur de notification qui les transmet vers le terminal.

Un serveur de notification dédié à un système d'exploitation d'un terminal correspond par exemple à un serveur APNS (pour Apple Push Notification Service en anglais) fourni par la société Apple© ou un serveur C2M (pour Cloud To Messaging en anglais) fourni par la société Google©.

Selon un mode particulier de réalisation de l'invention, l'environnement de la figure 1 comprend également une plateforme de service PFS permettant à un premier terminal, par exemple T1, de s'enregistrer auprès de la plateforme de service PFS et d'obtenir une information de contexte de communication relative à un deuxième terminal, par exemple T2, enregistré également auprès de la plateforme de service PFS. Lorsqu'un utilisateur du terminal T1 souhaite communiquer avec un utilisateur du terminal T2, le terminal T1 peut alors déterminer une application à utiliser pour établir la communication en fonction du service de communication fournissant par exemple la meilleure qualité de service. La plateforme de service PFS est par exemple connectée au réseau de communication Res1. La plateforme de service PFS et les terminaux T1 et T2 communiquent par exemple via un lien TCP/IP ou HTTP.

Selon un autre mode particulier de réalisation de l'invention, le procédé d'établissement d'une communication selon l'invention est mis en œuvre par le terminal T1 sans l'utilisation de la plateforme de service PFS. Selon ce mode particulier de réalisation de l'invention, le terminal T1 obtient une information de contexte de communication relative au terminal T2 directement depuis le terminal T2. Une fois l'information de contexte de communication relative au terminal T2 obtenue, le terminal T2 détermine le service de communication à utiliser pour établir une communication avc le terminal T2.

Selon un autre mode particulier de réalisation de l'invention, l'environnement de la figure 1 comprend un module ANDSF1 de gestion de sélection de réseaux associé au terminal T1 et un module ANDSF2 de gestion de sélection de réseaux associé au terminal T2. Un tel module ANDSF1, respectivement ANDSF2, est par exemple un module ANDSF (pour Access Network Discovery and Selection Function en anglais, défini par le standard 3GPP) du réseau de communication Res1, respectivement Res2, géré par l'opérateur du terminal T1, respectivement T2. Un tel module ANDSF1, respectivement ANDSF2, permet à l'opérateur du terminal T1, respectivement T2, d'inciter le terminal T1, respectivement T2, à se connecter à un réseau de communication prédéterminé en fonction de critères définis par l'opérateur du terminal T1, respectivement T2.

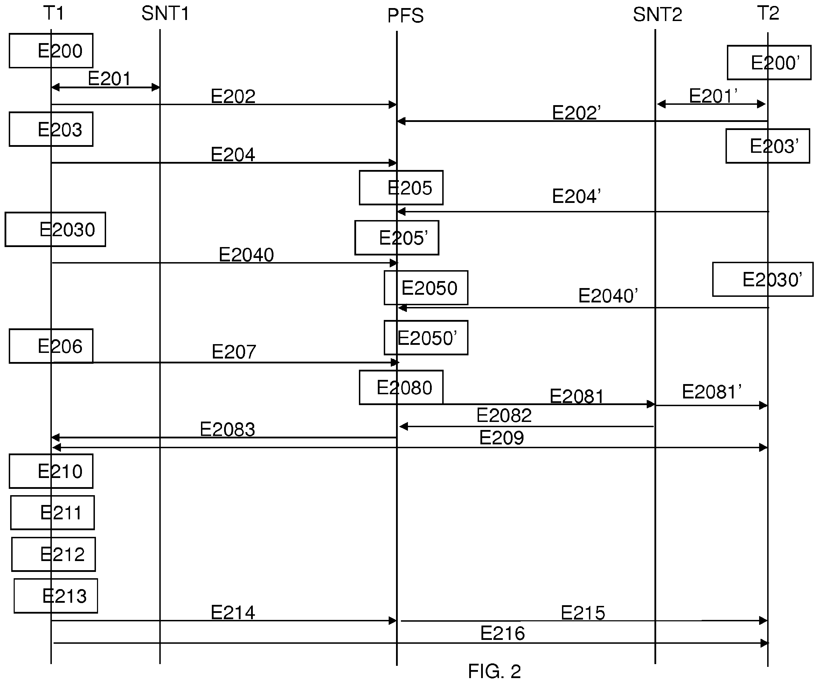

Des étapes du procédé d'établissement d'une communication entre au moins un terminal appelant T1 et un terminal appelé T2 et des étapes du procédé de fourniture d'une information de contexte de communication relative au terminal appelé vont maintenant être décrites en relation avec la figure 2. Le procédé d'établissement d'une communication entre le terminal T1 et le terminal T2 est mis en œuvre par le terminal T1, par exemple par une application ONE_COM installée préalablement sur le terminal T1 par l'utilisateur du terminal T1 ou fournie par l'opérateur du terminal T1.

Corrélativement, une occurrence de l'application ONE_COM est également installée sur le terminal T2.

Selon l'invention, l'application ONE_COM permet au terminal T1 de communiquer avec la plateforme de service PFS décrite en figure 1 et de déterminer un service de communication à utiliser pour établir une communication avec le terminal T2. L'établissement de la communication avec le terminal T2 est ainsi facilitée pour l'utilisateur du terminal T1 car l'utilisateur du terminal T1 n'a qu'à demander, via l'activation de l'application ONE_COM, l'établissement d'une communication avec le terminal T2.

Lors d'une étape E200, le terminal T1 obtient au moins une information de contexte de communication relative au terminal T1. Pour cela, le terminal T1 scanne sa mémoire afin d'identifier les applications de communication installées sur le terminal T1, telles que les applications de communication fournies par un fournisseur de services OTT. Le terminal T1 détecte ainsi par exemple une application APP_OTT permettant d'établir une communication audio, visiophonique ou texte via une connexion à un réseau de communication IP.

Le terminal T1 détecte également une application de communication APP_OP native fournie par l'opérateur du terminal T1 et permettant d'établir une communication via le réseau de communication de l'opérateur ou un réseau de communication interconnecté. Lors de l'établissement d'une communication selon l'application APP_OP, le service de communication mis en œuvre pour établir la communication dépend du type de connectivité du terminal T1 au moment de la demande d'établissement de la communication. Le terminal T1 peut être connecté à un réseau de communication mobile 3G ou à un réseau de communication mobile fonctionnant en mode circuit ne fournissant qu'un service de communication en mode audio, ou un réseau de communication mobile 4G fournissant un service de communication en mode audio ou en mode visiophonique.

Le terminal T1 détecte également une application de communication APP_RCS, qui peut être une application de communication native du terminal T1 ou qui a été installée sur le terminal T1 par l'utilisateur du terminal T1. L'application APP_RCS permet d'établir une communication audio ou visiophonique selon le standard RCS via par exemple une connexion à un réseau de communication mobile fonctionnant en mode circuit pour la partie audio de la communication et via une connexion à un réseau de communication mobile IP pour la partie vidéo ou données de la communication ou selon un autre exemple via une connexion à un réseau de communication IP pour la partie audio et vidéo. Selon l'un quelconque de ces exemples, la qualité de service n'est cependant pas garantie pour la transmission des données sur le réseau de communication mobile IP

Lors d'une étape E201, le terminal T1 détecte qu'il est connecté à un réseau de communication, par exemple un réseau de communication de type WIFI, 2G, ou 3G ou 4G.

Selon une première variante de réalisation de l'invention, au cours de l'étape E201, le terminal T1 envoie une demande de jeton de notification au serveur de notification SNT1 décrit en relation avec la figure 1. Au cours de l'étape E201, le serveur SNT1 fournit au terminal T1 un jeton de notification associé au terminal T1 et à l'application ONE_COM installée sur le terminal T1.

Lors d'une étape E202, le terminal T1 envoie une demande d'enregistrement à la plateforme de service PFS en insérant le jeton de notification reçu lors de l'étape E201. La demande d'enregistrement comprend notamment une information de contact du terminal T1, par exemple un numéro de téléphone du terminal T1. La demande d'enregistrement peut aussi comprendre des informations sur les capacités du terminal T1, telles que les protocoles supportés, les applications de communication installées, la connectivité du terminal T1, ou encore les paramètres de caméra, de microphone, de niveau de batterie du terminal T1, etc...

La connectivité du terminal T1 correspond par exemple aux réseaux de communication auxquels le terminal T1 est connecté et aux réseaux de communication auxquels le terminal T1 est susceptible de se connecter.

Des telles informations de capacités du terminal T1 correspondent à des informations de contexte de communication. En effet, de telles capacités sont utilisées lorsqu'une communication est établie entre le terminal T1 et un autre terminal.

Au cours de l'étape E202, la plateforme de service PFS reçoit la demande d'enregistrement. Au cours de l'étape E202, la plateforme de service PFS enregistre le terminal T1 et sauvegarde le jeton de notification associé au terminal T1 ainsi que les informations de capacités du terminal T1. Le jeton de notification associé au terminal T1 permet à la plateforme de service PFS de communiquer ultérieurement avec le terminal T1 via le serveur de notification SNT1 et selon cette première variante d'obtenir notamment au moins une information de contexte de communication relative au terminal T1.

Selon une deuxième variante de réalisation de l'invention, le terminal T1 ne demande pas de jeton de notification au serveur SNT1 lors de l'étape E201. Le terminal T1 s'enregistre directement auprès de la plateforme de service PFS au cours de l'étape E202.

Selon cette deuxième variante, au cours d'une étape E203, le terminal T1 détecte régulièrement les réseaux de communication à proximité auquel le terminal T1 est apte à se connecter et le réseau de communication auquel le terminal T1 est connecté. Au cours d'une étape E204 mise en œuvre régulièrement, le terminal T1 envoie une information de contexte de communication à la plateforme de service PFS. Par exemple, le terminal T1 envoie une information sur sa connectivité. Lors de l'étape E204, la plateforme de service PFS reçoit l'information de contexte de communication. Au cours d'une étape E205, la plateforme de service PFS sauvegarde une telle information en association avec l'enregistrement du terminal T1.

Selon le mode particulier de réalisation de l'invention mis en œuvre, l'une quelconque des première et deuxième variantes de réalisation peut être mise en œuvre ou les deux variantes de réalisation peuvent être mise en œuvre.

Selon un mode particulier de réalisation de l'invention, au cours d'une étape E2030, le terminal T1 détecte régulièrement un changement de contexte de communication, tel que par exemple : un changement de connectivité, l'atteinte d'un seuil minimal du niveau de la batterie du terminal T1, la désactivation ou l'activation d'une application de communication, etc... Au cours d'une étape E2040, le terminal T1 envoie à la plateforme de service PFS, une information du changement de contexte de communication détecté lors de l'étape E2030. Lors de l'étape E2040, la plateforme de service reçoit l'information du changement de contexte de communication envoyée par le terminal T1 puis au cours d'une étape E2050 sauvegarde une telle information en association avec l'enregistrement du terminal T1.

Selon la première variante de réalisation, lorsque le terminal T1 envoie à la plateforme de service une information de contexte de communication (étape E204) ou un changement de contexte de communication (étape E2040), le terminal T1 envoie également le jeton de notification reçu lors de l'étape E201.

La description des étapes E200' à E205', E2030', E2040' et E2050' effectuées pour le terminal T2 est identique à celles des étapes correspondantes E200 à E205, E2030, E2040 et E2050.

Lors d'une étape E206, le terminal T1 détecte l'activation d'une demande de communication avec le terminal T2. Par exemple, l'utilisateur du terminal T1 a sélectionné une information de contact relative au terminal T2 dans le répertoire du terminal T1 et a demandé au terminal T1 une mise en communication avec le terminal T2. L'utilisateur du terminal T1 peut avoir demandé la mise en communication par exemple en appuyant sur un bouton physique du terminal T1, tel qu'une touche du terminal T1, ou en cliquant sur un bouton affiché sur une interface tactile du terminal T1 ou encore par commande vocale, par exemple en prononçant la commande « appeler ».

Selon un mode particulier de réalisation de l'invention, lors de l'étape E206, l'utilisateur du terminal T1 peut préciser lors de la demande de mise en communication le mode de communication selon lequel la communication demandée doit être établie. Par exemple, le bouton du terminal T1 utilisé pour la demande de mise en communication est dédié à un mode de communication prédéterminé, par exemple mode audio ou mode visiophonique.

Selon un autre mode particulier de réalisation de l'invention, lors de l'étape E206, l'utilisateur du terminal T1 peut ne pas préciser lors de la demande de mise en communication le mode de communication selon lequel la communication demandée doit être établie. Dans ce mode de réalisation de l'invention, l'utilisateur du terminal T1 laisse le terminal T1 et plus précisément l'application ONE_COM déterminer le mode de communication selon lequel la communication demandée sera établie.

Suite à l'étape E206, au cours d'une étape E207, le terminal T1 envoie à la plateforme de service une demande d'information de contexte de communication relative au terminal T2. La demande d'information de contexte de communication envoyée par le terminal T1 comprend notamment une information de contact du terminal T2, par exemple le numéro de téléphone du terminal T2. Au cours de l'étape E207, la plateforme de service PFS reçoit la demande d'information de contexte de communication relative au terminal T2.

Au cours d'une étape E2080, la plateforme de service obtient une information de contexte de communication relative au terminal T2 à partir des informations sauvegardées en association avec le terminal T2.

Selon un mode particulier de réalisation de l'invention, au cours d'une étape E2081, la plateforme de service PFS envoie au serveur de notification SNT2 une demande d'information de contexte de communication, par exemple une information relative à la connectivité du terminal T2. Une telle demande d'information de contexte est envoyée, par exemple via un lien TCP/IP ou HTTP. La demande d'information de contexte comprend notamment le jeton de notification associé au terminal T2 reçu au cours de l'étape E201' d'enregistrement du terminal T2.

Lors d'une étape E2081', grâce au jeton de notification, le serveur de notification SNT2 notifie le terminal T2 d'une telle demande d'information de contexte afin que le terminal T2 mette à jour les informations de contexte de communication le concernant, telles que la connectivité du terminal T2 et les applications de communication disponibles sur le terminal T2.

Ainsi, au cours d'une étape E2082, le terminal T2 envoie à la plateforme de service PFS les informations de contexte de communication relative au terminal T2 mises à jour.

Au cours d'une étape E2083, la plateforme de service PFS envoie au terminal T1 au moins une information de contexte de communication relative au terminal T2 obtenue lors de l'étape E2080 ou reçue lors de l'étape E2082.

Selon un mode particulier de réalisation de l'invention, lorsque le terminal T1 supporte le standard RCS, lors d'une étape E209, le terminal T1 envoie un message OPTIONS selon le protocole SIP au terminal T2, via le réseau de communication Res1 de la figure 1. Un tel message OPTIONS est un message de découvertes des capacités de communication RCS du terminal T2. Le terminal T2 répond au terminal T1 lors de l'étape E209 par un message 200 OK comprenant les capacités de communications RCS du terminal T2.

Lors d'une étape E210, le terminal T1 met alors à jour les services de communication qui peuvent être utilisés pour établir une communication avec le terminal T2. Au cours de l'étape E210, le terminal T1 identifie les services de communication disponibles pouvant être mis en œuvre à la fois par le terminal T1 et par le terminal T2 à partir des informations de contexte de communication relative au terminal T1 obtenues lors des étapes E200 et E203 et à partir des informations de contexte de communication relatives au terminal T2 reçues à l'étape E209.

Par exemple, de tels services sont :
- si le terminal T1 et le terminal T2 sont connectés à un réseau de communication 4G, un service de communication en mode audio ou en mode visiophonique sur un tel réseau de communication,
- si le terminal T1 et le terminal T2 sont connectés à un réseau de communication 3G, un service de communication en mode audio fonctionnant en mode circuit ou un service de communication en mode audio VoIP,
- si le terminal T1 et le terminal T2 sont connectés à un réseau de communication WIFI et disposent chacun d'une application de communication fournie par un fournisseur de services OTT, le service de communication en mode audio ou en mode visiophonique fourni par une telle application,
- si le terminal T1 et le terminal T2 sont connectés à un réseau de communication 3G et supportent le standard RCS, un service de communication audio avec fonctionnalités RCS.

Selon un mode particulier de réalisation de l'invention, lorsque l'utilisateur du terminal T1 n'a pas spécifié le mode de communication souhaité lors de l'étape E206 de demande de mise en communication, un mode de communication est déterminé par le terminal T1 au cours d'une étape E211.

Pour cela, le terminal T1 prend par exemple en compte les habitudes de communication entre le terminal T1 et le terminal T2, à partir d'un historique de communications établies entre le terminal T1 et le terminal T2 au cours d'une période récente, par exemple au cours des derniers mois, ou des dernières semaines. Le terminal T1 stocke par exemple pour chaque mode de communication possible, une information d'historique représentant la fréquence de communication entre le terminal T1 et le terminal T2 selon le mode de communication considéré. Le terminal T1 peut également stocker une information indiquant un ou plusieurs modes de communication selon lesquels l'utilisateur du terminal T1 ne souhaite pas communiquer. Une telle information peut avoir été définie au préalable par l'utilisateur du terminal T1.

Dans le répertoire du terminal T1, l'information de contact du terminal T2 peut également comporter une information indiquant un ou plusieurs modes de communication selon lesquels l'utilisateur du terminal T2 ne souhaite pas communiquer. Une telle information peut avoir été obtenue au préalable en provenance de la plateforme de service PFS ou via un message OPTIONS lors de la découverte des capacités de communication du terminal T2.

Selon un autre exemple, l'information d'historique de communication n'est pas définie par rapport à des communications établies préalablement avec le terminal T2 mais par rapport à des communications établies préalablement par le terminal T1 avec l'ensemble des contacts de son répertoire. L'information d'historique stockée pour chaque mode de communication représente alors la fréquence de communication selon ce mode de communication du terminal T1 avec tous ses contacts. Selon cet exemple, le terminal T1 peut aussi disposer pour chaque mode de communication pouvant être mis en œuvre par le terminal T2, d'une information de préférence de communication relative au terminal T2. Cette information de préférence définit par exemple un ordre de préférence des modes de communication selon lesquels l'utilisateur du terminal T2 préfère communiquer. Ou bien, l'information de préférence associée à un mode de communication représente la fréquence avec laquelle le terminal T2 communique avec l'ensemble de ses contacts selon le mode de communication considéré. L'information de préférence relative au terminal T2 peut avoir été obtenue au préalable en provenance de la plateforme de service PFS ou via un message OPTIONS lors de la découverte des capacités de communication du terminal T2.

A partir de l'information d'historique définie selon l'un quelconque des exemples décrits ci-dessus, et éventuellement de l'information de préférence du terminal T2, le terminal T1 détermine au cours de l'étape E211 un mode de communication selon lequel la communication sera établie. Par exemple, si l'utilisateur du terminal T1 et l'utilisateur du terminal T2 communiquent plus fréquemment en mode visiophonique qu'en mode audio ou texte, le mode de communication déterminé sera le mode de communication visiophonique.

Lors de l'étape E211 de détermination du mode de communication, le terminal T1 prend en compte, lorsqu'elles existent, les informations indiquant un ou plusieurs modes de communication selon lesquels l'utilisateur du terminal T1 ou du terminal T2 ne souhaite pas communiquer.

Selon l'exemple précédent, si une communication en mode visiophonique n'est pas possible entre le terminal T1 et le terminal T2, et que la fréquence de communication entre le terminal T1 et le terminal T2 selon le mode audio et le mode texte est la même, mais que l'utilisateur du terminal T1 ne souhaite pas communiquer en mode texte, le terminal T1 détermine le mode de communication audio.

Lors d'une étape E212, le terminal T1 détermine le service de communication à utiliser pour établir la communication demandée à l'étape E206 selon le mode de communication déterminé lors de l'étape E210 ou selon le mode de communication indiqué lors de la demande de mise en communication effectuée à l'étape E206. Par exemple, l'utilisateur du terminal T1 a indiqué une demande de mise en communication en mode visiophonique.

Selon un mode particulier de réalisation de l'invention, la détermination du service de communication est effectuée par la sélection du service de communication offrant la meilleure qualité de service parmi les services de communication identifiés lors de l'étape E210. Par exemple, si le terminal T1 et le terminal T2 sont connectés à un réseau de communication 4G, le service de communication en mode visiophonique sur un tel réseau de communication est sélectionné car un tel service de communication procure une qualité de service garantie.

Sinon, si le terminal T1 est connecté à un réseau de communication 4G ou à un réseau de communication 3G et supporte le standard RCS, et le terminal T2 est connecté à un réseau de communication 3G et supporte le standard RCS, le service de communication audio avec fonctionnalités RCS et notamment visiophonique est sélectionné.

Sinon, si le terminal T1 et le terminal T2 sont connectés à un réseau de communication WIFI et disposent chacun d'une application de communication fournie par un fournisseur de services OTT, le service de communication en mode visiophonique fourni par une telle application est sélectionné. Sinon, dans le cas où aucun service de communication visiophonique n'est disponible entre le terminal T1 et le terminal T2, par exemple parce que l'un des deux terminaux n'est pas connecté à un réseau de communication 4G, ou à un réseau de communication 3G ou bien l'un des deux terminaux ne supportent pas le standard RCS, le terminal T1 bascule la communication demandée en mode audio et le service de communication sélectionné est un service de communication en mode audio fonctionnant sur un réseau de communication en mode circuit.

Selon un autre mode particulier de réalisation de l'invention, le service de communication est par exemple sélectionné en fonction des conditions de trafic du réseau de communication auquel le terminal T1 est connecté. Par exemple, si l'information de contexte de communication relative au terminal T1 indique que le réseau de communication 4G auquel le terminal T1 est connecté ne dispose plus de bande passante disponible, le terminal T1 sélectionne :
- le service de communication audio avec fonctionnalités RCS fourni par un réseau de communication 3G si le terminal T1 et le terminal T2 supportent le standard RCS,
- ou bien le service de communication en mode visiophonique fourni par une application de communication d'un fournisseur de services OTT si le terminal T1 et le terminal T2 sont connectés à un réseau de communication WIFI,
- ou bien le terminal T1 bascule en mode audio sur un réseau de communication mobile fonctionnant en mode circuit sinon.

Lors d'une étape E216, le terminal T1 envoie au terminal T2 une demande de communication conformément au service de communication déterminé lors de l'étape E212. Par exemple, si le service de communication déterminé correspond au service de communication en mode visiophonique fourni par un réseau de communication 4G, la demande de communication envoyée par le terminal T1 est un message INVITE selon le protocole SIP. La communication demandée est ensuite établie conformément aux procédures connues d'établissement d'une communication en fonction du service de communication déterminé.

Selon un mode particulier de réalisation de l'invention, l'information de contexte de communication relative au terminal appelant T1 ou au terminal T2 appelé comprend au moins un réseau de communication auquel le terminal appelant ou le terminal appelé est susceptible de se connecter. Selon ce mode particulier de réalisation de l'invention, le terminal T1 identifie également parmi les services de communication disponibles entre le terminal T1 et le terminal T2 un service de communication fourni par un réseau de communication auquel le terminal appelant ou le terminal appelé est susceptible de se connecter.

Par exemple, sur la figure 1, le terminal T1 est connecté au réseau de communication Res1, par exemple un réseau de communication 3G et est apte à se connecter au réseau de communication Res3, par exemple un réseau de communication 4G.

Dans cet exemple, si le terminal T2 est connecté à un réseau de communication 4G, lors de l'étape E212, le terminal T1 sélectionne le service de communication en mode visiophonique fourni par le réseau de communication 4G.

Au cours d'une étape E213, le terminal T1 change de connectivité en se connectant au réseau de communication 4G Res3 par l'envoi d'un message d'enregistrement REGISTER selon le protocole SIP à un serveur du réseau de communication Res3.

Lorsque le terminal T1 a reçu l'acquittement du réseau de communication Res3 confirmant son enregistrement dans le réseau de communication Res3, au cours de l'étape E216, le terminal T1 envoie via le réseau de communication Res3, à destination du terminal T2, une demande de communication conformément au protocole utilisé par le service de communication sélectionné. Selon un autre exemple, le terminal T1 est connecté à un réseau de communication 4G. Selon cet exemple, le terminal T2 est connecté à un réseau de communication 3G et est apte à se connecter à un réseau de communication 4G. Lors de l'étape E212, le terminal T1 sélectionne alors le service de communication en mode visiophonique fourni par le réseau de communication 4G.

Selon cet exemple, au cours d'une étape E214, le terminal T1 envoie à destination du terminal T2 une demande de connexion au réseau de communication 4G. Une telle demande peut être envoyée via le réseau de communication 4G auquel est connecté le terminal T1 vers la plateforme de service PFS. Dans ce cas, au cours d'une étape E215, la plateforme de service PFS communique avec le terminal T2, via le serveur de notification SNT2 pour demander au terminal T2 de se connecter au réseau de communication 4G auquel il est apte à se connecter.

En variante, la plateforme de service PFS peut communiquer avec le module de gestion ANDSF2 associé au terminal T2 afin que le module ANDSF2 incite le terminal T2 à se connecter au réseau de communication 4G. Cette variante est possible si le module ANDSF2 est géré par le même opérateur que l'opérateur gérant la plateforme de service PFS ou si l'opérateur gérant le module ANDSF2 a autorisé une interconnexion avec l'opérateur gérant la plateforme de service PFS.

Lorsque le terminal T2 s'est connecté au réseau de communication 4G, un message d'acquittement est transmis (non représenté) par le terminal T2 au terminal T1, via éventuellement la plateforme de service ou le module ANDSF2. Lors de l'étape E216, le terminal T1 envoie alors au terminal T2 une demande de communication conformément au service de communication déterminé lors de l'étape E212.

Selon un mode particulier de réalisation de l'invention, les étapes E210, E211 et E212 sont mises en œuvre par la plateforme de service PFS. Dans ce cas :
- suite à l'étape E206, le terminal T1 transmet à la plateforme de service PFS une information indiquant l'activation sur le terminal T1 d'une demande de mise en communication avec le terminal T2,
- suite à l'étape E212, la plateforme de service PFS transmet au terminal T1 une information indiquant le service de communication déterminé à l'étape E212 afin que lors de l'étape E216, le terminal T1 puisse envoyer une demande de communication selon le service de communication déterminé.

Selon un autre mode particulier de réalisation de l'invention, le procédé d'établissement d'une communication est mis en œuvre sans l'utilisation de la plateforme de service. Selon ce mode particulier de réalisation de l'invention, les étapes E201, E202, E204, E205, E2030 et E2040 ne sont pas mises en œuvre.

Dans ce mode particulier de réalisation de l'invention, les étapes E200, E200', E203, E203' et E206 sont effectuées comme décrites précédemment.

Suite à l'étape E206, afin d'obtenir l'information de contexte du terminal T2, au cours de l'étape E207, le terminal T1 envoie au terminal T2 une demande d'information de contexte de communication relative au terminal T2. Une telle demande peut par exemple être faite par l'envoi d'un message SIP OPTIONS dédié à l'information de contexte de communication de l'invention. Au cours de l'étape E2083, le terminal T2 répond au terminal T1 en fournissant une information de contexte de communication, telle que par exemple une information sur la connectivité du terminal T2, et/ou les capacités de communication du terminal T2. Un message comprenant une telle information de contexte sera décrit plus loin en relation avec la figure 5. Un tel message peut par exemple être envoyé sous la forme d'un message SIP 200 OK.

En variante, d'autres protocoles définissant des messages spécifiques à l'objet de l'invention peuvent être utilisés pour permettre au terminal T1 de demander l'information de contexte de communication relative au terminal T2 et pour permettre au terminal T2 de fournir ladite information de contexte de communication.

Les étapes E209 à E213 sont identiques à celles décrites avec le mode de réalisation utilisant la plateforme de service PFS.

Lors de l'étape optionnelle E214, le terminal T1 communique directement avec le terminal T2 afin de demander au terminal T2 de se connecter au réseau de communication sur lequel le service de communication déterminé à l'étape E212 est fourni.

L'étape E216 est identique au mode particulier de réalisation décrit précédemment.

La figure 3 illustre un terminal 30, dit terminal appelant, apte à mettre en œuvre le procédé d'établissement d'une communication avec un terminal appelé selon un mode particulier de réalisation de l'invention.

Le terminal 30 comprend un module de traitement 31, comprenant notamment un module de stockage MEM, par exemple une mémoire, et une unité de traitement PROC, équipée par exemple d'un microprocesseur. L'unité de traitement PROC est pilotée par un programme d'ordinateur PG mettant en œuvre le procédé d'établissement d'une communication avec un terminal appelé tel que décrit en relation avec la figure 2. Le programme d'ordinateur PG correspond par exemple à l'application ONE_COM décrite en relation avec la figure 2.

A l'initialisation, les instructions de code du programme d'ordinateur PG sont par exemple chargées en mémoire MEM avant d'être exécutées par le processeur de l'unité de traitement PROC.

Le processeur de l'unité de traitement PROC met en œuvre les étapes du procédé d'établissement d'une communication avec un terminal appelé, selon les instructions du programme d'ordinateur PG. Le processeur de l'unité de traitement PROC met notamment en œuvre :
- une étape de détection de l'activation par le terminal appelant d'une demande d'établissement d'une communication avec le terminal appelé,
- une étape d'obtention d'une première information de contexte de communication relative au terminal appelant,
- une étape d'obtention, d'au moins une deuxième information de contexte de communication relative au terminal appelé,
- une étape de détermination d'un service de communication à utiliser pour établir ladite communication demandée à destination du terminal appelé, la détermination étant effectuée à partir d'au moins la première information de contexte de communication et la deuxième information de contexte de communication,
- une étape d'envoi, à destination du terminal appelé, d'une demande de communication selon le service de communication déterminé.

Le terminal 30 comprend également une interface utilisateur INT apte à détecter l'activation d'une demande d'établissement d'une communication avec le terminal appelé. Une telle interface utilisateur est par exemple un clavier numérique ou une interface tactile permettant à un utilisateur d'interagir sur le terminal 30.

Selon un mode particulier de réalisation de l'invention, l'interface utilisateur INT comprend notamment un bouton apte à être activé pour demander une mise en communication avec un contact préalablement sélectionné. Le bouton peut être dédié à un mode de communication prédéterminé : communication audio, vidéo, texte. Le bouton est interfacé avec le module de traitement de sorte que le module de traitement déclenche l'exécution des instructions du programme d'ordinateur PG suite à la détection de l'activation du bouton. Un tel bouton peut être un bouton physique du terminal 30 ou un bouton affiché sur une interface tactile du terminal.

Le module de traitement 31 est notamment apte à :
- obtenir une information de contexte de communication relative au terminal appelant,
- obtenir une information de contexte de communication relative au terminal appelé,
- déterminer, à partir d'au moins une information de contexte de communication relative au terminal appelant et une information de contexte de communication relative au terminal appelé, un service de communication à utiliser pour établir une communication demandée via l'interface utilisateur INT.

Le terminal 30 comprend également un module de communication COM permettant au terminal 30 de se connecter à un réseau de communication et d'échanger des données avec des terminaux connectés à ce réseau de communication, ou d'établir des communications avec d'autres terminaux.

Le module de communication COM est notamment apte à envoyer, à destination du terminal appelé, une demande de communication selon le service de communication déterminé.

Le module de communication COM est apte à recevoir, en provenance du terminal appelé ou d'une plateforme de service auprès de laquelle le terminal appelant et le terminal appelé se sont préalablement enregistrés, l'information de contexte de communication relative au terminal appelé. Selon un mode particulier de réalisation de l'invention, le terminal 30 comprend un module de notification NOT apte à envoyer une demande d'un jeton de notification à un serveur de notification dédié à un système d'exploitation du terminal 30. Selon ce mode particulier de réalisation de l'invention, le module de traitement 31 est apte à insérer le jeton de notification dans une demande d'enregistrement et à envoyer, via le module de communication COM, la demande d'enregistrement à la plateforme de service.

Selon un autre mode particulier de réalisation de l'invention, le module de notification NOT est apte à envoyer à la plateforme de service, une notification d'un changement du contexte de communication relatif au terminal appelant.

Selon un mode particulier de réalisation de l'invention, le terminal 30 est un terminal, tel qu'un terminal mobile, ou fixe, ou une tablette.

La figure 4 illustre un dispositif 40 apte à mettre en œuvre le procédé de fourniture d'une information de contexte de communication relative à un premier terminal selon un mode particulier de réalisation de l'invention.

Le dispositif 40 comprend un module de traitement 41, comprenant notamment un module de stockage MEM', par exemple une mémoire, et une unité de traitement PROC', équipée par exemple d'un microprocesseur. L'unité de traitement PROC' est pilotée par un programme d'ordinateur PG' mettant en œuvre le procédé de fourniture d'une information de contexte de communication relative à un premier terminal tel que décrit en relation avec la figure 2.

A l'initialisation, les instructions de code du programme d'ordinateur PG' sont par exemple chargées en mémoire MEM' avant d'être exécutées par le processeur de l'unité de traitement PROC'.

Le processeur de l'unité de traitement PROC' met en œuvre les étapes du procédé de fourniture d'une information de contexte de communication relative à un premier terminal, selon les instructions du programme d'ordinateur PG'. Le processeur de l'unité de traitement PROC' met notamment en œuvre :
- une étape de réception d'une demande d'information de contexte de communication relative au premier terminal, la demande ayant été envoyée par un deuxième terminal souhaitant établir une communication avec le premier terminal,
- une étape de fourniture de ladite information de contexte relative au premier terminal.

Le module de traitement 41 est notamment apte à obtenir une information de contexte de communication relative au premier terminal.

Selon un mode particulier de réalisation de l'invention, le dispositif 40 est compris dans un terminal, par exemple le terminal T2 de la figure 1. Selon un mode particulier de réalisation de l'invention, le terminal 40 peut être un terminal mobile, ou un terminal fixe, ou une tablette, etc.

Selon ce mode particulier de réalisation de l'invention, le module de traitement 41 met en œuvre par exemple l'étape E200' pour obtenir une information de contexte de communication relative au premier terminal.

Selon un autre mode particulier de réalisation de l'invention, le dispositif 40 est compris dans un serveur. Selon ce mode particulier de réalisation de l'invention, le module de traitement 41 met en œuvre par exemple l'étape E2080 et/ou les étapes E2081 et E2082.

Selon ce mode particulier de réalisation de l'invention, le module de stockage MEM' est notamment apte à sauvegarder l'information de contexte de communication relative au premier terminal.

Le dispositif 40 comprend également un module de communication COM' permettant au dispositif 40 de se connecter à un réseau de communication et d'échanger des données avec des terminaux connectés à ce réseau de communication, ou d'établir des communications avec d'autres terminaux. Le module de communication COM' est notamment apte à :
- recevoir une demande d'information de contexte relative au premier terminal, la demande ayant été envoyée par un deuxième terminal souhaitant établir une communication avec le premier terminal,
- fournir au deuxième terminal ladite information de contexte.

Selon un mode particulier de réalisation de l'invention, le module de communication COM' est apte à recevoir une information de changement de contexte de communication relative au premier terminal.

Selon un autre mode particulier de réalisation de l'invention, le module de communication COM' est apte à recevoir une demande d'enregistrement du premier terminal.

En variante de cet autre mode particulier de réalisation de l'invention, le module de communication COM' est apte à recevoir une demande d'enregistrement du premier terminal comprend un jeton de notification à un serveur de notification dédié à un système d'exploitation du premier terminal. Le module de traitement 41 est apte à extraire un tel jeton de notification et à le sauvegarder dans le module de stockage MEM'.

La figure 5 illustre une partie d'un message M comprenant une information de contexte de communication relative à un terminal, par exemple le terminal T2 de la figure 1. Le message M est envoyé à destination du terminal T1 au cours de l'étape E2083 décrite en relation avec la figure 2. Grâce à l'information de contexte de communication du terminal T2 comprise dans le message M et à une information de contexte de communication du terminal T1, le terminal T1 détermine un service de communication à utiliser pour établir une communication avec le terminal T2.

Selon un premier mode particulier de réalisation de l'invention, le message M est envoyé par la plateforme de service PFS. Dans ce cas, le message M est envoyé sous la forme de réponse http par exemple.

Selon un deuxième mode particulier de réalisation de l'invention, le message M est envoyé par le terminal T2. Dans ce cas, le message M est envoyé sous la forme d'un message SIP 200OK par exemple.

Le message M comprend par exemple un champ de données C1 indiquant le type de réseau d'accès auquel le terminal T2 est connecté, par exemple le réseau Res2 de la figure 1.

Le message M comprend par exemple un champ de données C2 indiquant au moins un réseau d'accès auquel le terminal T2 est apte à se connecter, par exemple le réseau Res1 de la figure 1. Le message M peut comprendre également un champ de données C3 indiquant une application de communication supportée par le terminal T2, par exemple l'application APP_OTT fournie par un fournisseur de service OTT.

## Revendications

1. Procédé d'établissement d'une communication entre au moins un terminal appelant (T1) et un terminal appelé (T2), comprenant:
• une étape de détection (E206) par le terminal appelant d'une interaction utilisateur demandant l'établissement d'une communication avec le terminal appelé,
• une étape d'obtention (E200) d'une première information de contexte de communication relative au terminal appelant, ladite première information de contexte de communication comprenant une information de connectivité du terminal appelant,
• une étape d'obtention (E2083) d'au moins une deuxième information de contexte de communication relative au terminal appelé, ladite deuxième information de contexte de communication comprenant une information de connectivité du terminal appelé,
• une étape de détermination (E212) d'un service de communication à utiliser pour établir ladite communication demandée à destination du terminal appelé, la détermination étant effectuée à partir d'au moins la première information de contexte de communication et la deuxième information de contexte de communication,
• une étape d'envoi (E216), à destination du terminal appelé, d'une demande de communication selon le service de communication déterminé,
le procédé comprenant lorsque le terminal appelé est connecté à un troisième réseau de communication qui est différent d'un deuxième réseau de communication sur lequel le service de communication déterminé est mis en œuvre, une étape d'envoi, par le terminal appelant, à destination du terminal appelé d'une demande de connexion du terminal appelé au deuxième réseau de communication, de sorte que le terminal appelé se connecte au deuxième réseau de communication.

2. Procédé d'établissement d'une communication selon la revendication 1, **caractérisé en ce que**, lorsqu'au moins deux services de communication peuvent être mis en œuvre entre le terminal appelant et le terminal appelé, l'étape de détermination sélectionne parmi lesdits services de communication un service de communication fournissant la meilleure qualité de service.

3. Procédé d'établissement d'une communication selon l'une quelconque des revendications 1 à 2, **caractérisé en ce que** lorsque le terminal appelant est connecté à un premier réseau de communication qui est différent d'un deuxième réseau de communication sur lequel le service de communication déterminé est mis en œuvre, il comprend une étape de connexion du terminal appelant au deuxième réseau de communication.

4. Procédé d'établissement d'une communication selon l'une quelconque des revendications 1 à 3, **caractérisé en ce que** lorsque la demande d'établissement de communication est effectuée pour au moins deux modes de communication, l'information de contexte de communication relative au terminal appelant comprend une information relative à un historique de communications préalablement établies entre le terminal appelant et le terminal appelé, dite information d'historique, et **en ce que** le procédé comprend une étape de détermination d'un mode de communication en fonction de ladite information d'historique, le service de communication étant déterminé pour le mode de communication déterminé.

5. Procédé d'établissement d'une communication selon l'une quelconque des revendications 1 à 4, dans lequel ladite première information de contexte de communication comprend en outre une information sur au moins une application de communication installée sur le terminal appelant.

6. Procédé d'établissement d'une communication selon l'une quelconque des revendications 1 à 5, dans lequel ladite deuxième information de contexte de communication comprend en outre une information sur au moins une application de communication installée sur le terminal appelé.

7. Terminal (30), dit terminal appelant, adapté pour établir une communication avec un terminal appelé, comprenant :
• une interface utilisateur (INT) adapté pour détecter une interaction utilisateur demandant l'établissement d'une communication avec le terminal appelé,
• un module de traitement (31) adapté pour :
▪ obtenir une première information de contexte de communication, ladite première information de contexte de communication correspondant à une information de connectivité du terminal appelant relative à des réseaux de communication auxquels le terminal est connecté et à des réseaux de communication auxquels le terminal est susceptible de se connecter,
▪ obtenir une deuxième information de contexte de communication, ladite deuxième information de contexte de communication correspondant à une information de connectivité du terminal appelé relative à des réseaux de communication auxquels le terminal est connecté et à des réseaux de communication auxquels le terminal est susceptible de se connecter,
▪ déterminer, à partir d'au moins la première information de contexte de communication et la deuxième information de contexte de communication, un service de communication à utiliser pour établir une communication demandée via l'interface utilisateur,
• un module de communication (COM) adapté pour :
▪ envoyer, à destination du terminal appelé, une demande de communication selon le service de communication déterminé,
le module de traitement étant adapté pour envoyer à destination du terminal appelé, lorsque le terminal appelé est connecté à un troisième réseau de communication qui est différent d'un deuxième réseau de communication sur lequel le service de communication déterminé est mis en œuvre, une demande de connexion du terminal appelé au deuxième réseau de communication, de sorte que le terminal appelé se connecte au deuxième réseau de communication.

8. Terminal (30) appelant selon la revendication 7, dans lequel ladite première information de contexte de communication comprend en outre une information sur au moins une application de communication installée sur le terminal appelant.

9. Terminal (30) appelant selon la revendication 7 ou 8, dans lequel ladite deuxième information de contexte de communication comprend en outre une information sur au moins une application de communication installée sur le terminal appelé.

10. Programme d'ordinateur comportant des instructions de code de programme pour l'exécution des étapes du procédé d'établissement d'une communication selon l'une quelconque des revendications 1 à 6, lorsque le programme est exécuté par un processeur.

## Patentansprüche

1. Verfahren zur Herstellung einer Kommunikation zwischen mindestens einem rufenden Endgerät (T1) und einem gerufenen Endgerät (T2), beinhaltend:
• einen Schritt des Erkennens (E206), durch das rufende Endgerät, einer Benutzerinteraktion, die die Herstellung einer Kommunikation mit dem gerufenen Endgerät anfragt,
• einen Schritt des Erhaltens (E200) einer ersten, auf das rufende Endgerät bezogenen Kommunikationskontextinformation, wobei die erste Kommunikationskontextinformation eine Konnektivitätsinformation des rufenden Endgeräts beinhaltet,
• einen Schritt des Erhaltens (E2083) mindestens einer zweiten, auf das gerufene Endgerät bezogenen Kommunikationskontextinformation, wobei die zweite Kommunikationskontextinformation eine Konnektivitätsinformation des gerufenen Endgeräts beinhaltet,
• einen Schritt des Bestimmens (E212) eines zu verwendenden Kommunikationsdienstes, um die angefragte Kommunikation mit dem gerufenen Endgerät herzustellen, wobei das Bestimmen auf Grundlage mindestens der ersten Kommunikationskontextinformation und der zweiten Kommunikationskontextinformation durchgeführt wird,
• einen Schritt des Sendens (E216), an das gerufene Endgerät, einer Kommunikationsanfrage gemäß dem bestimmten Kommunikationsdienst,
wobei das Verfahren, wenn das gerufene Endgerät mit einem dritten Kommunikationsnetzwerk verbunden ist, das sich von einem zweiten Kommunikationsnetzwerk, in dem der bestimmte Kommunikationsdienst eingerichtet ist, unterscheidet, einen Schritt des Sendens, durch das rufende Endgerät an das gerufene Endgerät, einer Anfrage zum Verbinden des gerufenen Endgeräts mit dem zweiten Kommunikationsnetzwerk beinhaltet, sodass sich das gerufene Endgerät mit dem zweiten Kommunikationsnetzwerk verbindet.

2. Verfahren zur Herstellung einer Kommunikation nach Anspruch 1, **dadurch gekennzeichnet, dass**, wenn mindestens zwei Kommunikationsdienste zwischen dem rufenden Endgerät und dem gerufenen Endgerät eingerichtet werden können, in dem Schritt des Bestimmens ein Kommunikationsdienst aus den Kommunikationsdiensten ausgewählt wird, der die beste Dienstequalität bereitstellt.

3. Verfahren zur Herstellung einer Kommunikation nach einem der Ansprüche 1 bis 2, **dadurch gekennzeichnet, dass** es, wenn das rufende Endgerät mit einem ersten Kommunikationsnetzwerk verbunden ist, das sich von einem zweiten Kommunikationsnetzwerk, in dem der bestimmte Kommunikationsdienst eingerichtet ist, unterscheidet, einen Schritt des Verbindens des rufenden Endgeräts mit dem zweiten Kommunikationsnetzwerk beinhaltet.

4. Verfahren zur Herstellung einer Kommunikation nach einem der Ansprüche 1 bis 3, **dadurch gekennzeichnet, dass**, wenn die Anfrage zur Herstellung einer Kommunikation für mindestens zwei Kommunikationsmodi durchgeführt wird, die auf das rufende Endgerät bezogene Kommunikationskontextinformation eine Information über einen Verlauf von zuvor zwischen dem rufenden Endgerät und dem gerufenen Endgerät hergestellten Kommunikationen beinhaltet, die als Verlaufsinformation bezeichnet wird, und dadurch, dass das Verfahren einen Schritt des Bestimmens eines Kommunikationsmodus in Abhängigkeit von der Verlaufsinformation beinhaltet, wobei der Kommunikationsdienst für den bestimmten Kommunikationsmodus bestimmt wird.

5. Verfahren zur Herstellung einer Kommunikation nach einem der Ansprüche 1 bis 4, wobei die erste Kommunikationskontextinformation ferner eine Information über mindestens eine in dem rufenden Endgerät installierte Kommunikationsanwendung beinhaltet.

6. Verfahren zur Herstellung einer Kommunikation nach einem der Ansprüche 1 bis 5, wobei die zweite Kommunikationskontextinformation ferner eine Information über mindestens eine in dem gerufenen Endgerät installierte Kommunikationsanwendung beinhaltet.

7. Endgerät (30), bezeichnet als rufendes Endgerät, das dazu ausgelegt ist, eine Kommunikation mit einem gerufenen Endgerät herzustellen, beinhaltend:
• eine Benutzerschnittstelle (INT), die dazu ausgelegt ist, eine Benutzerinteraktion zu erkennen, die die Herstellung einer Kommunikation mit dem gerufenen Endgerät anfragt,
• ein Verarbeitungsmodul (31), das für Folgendes ausgelegt ist:
▪ Erhalten einer ersten Kommunikationskontextinformation, wobei die erste Kommunikationskontextinformation einer Konnektivitätsinformation des rufenden Endgeräts über Kommunikationsnetzwerke, mit dem das Endgerät verbunden ist, und über Kommunikationsnetzwerke, mit dem sich das Endgerät potentiell verbinden kann, entspricht,
▪ Erhalten einer zweiten Kommunikationskontextinformation, wobei die zweite Kommunikationskontextinformation einer Konnektivitätsinformation des gerufenen Endgeräts über Kommunikationsnetzwerke, mit dem das Endgerät verbunden ist, und über Kommunikationsnetzwerke, mit dem sich das Endgerät potentiell verbinden kann, entspricht,
▪ Bestimmen, auf Grundlage mindestens der ersten Kommunikationskontextinformation und der zweiten Kommunikationskontextinformation, eines zu verwendenden Kommunikationsdienstes, um eine angefragte Kommunikation über die Benutzerschnittstelle herzustellen,
• ein Kommunikationsmodul (COM), das für Folgendes ausgelegt ist:
▪ Senden, an das gerufene Endgerät, einer Kommunikationsanfrage gemäß dem bestimmten Kommunikationsdienst,
wobei das Verarbeitungsmodul dazu ausgelegt ist, wenn das gerufene Endgerät mit einem dritten Kommunikationsnetzwerk verbunden ist, das sich von einem zweiten Kommunikationsnetzwerk, in dem der bestimmte Kommunikationsdienst eingerichtet ist, unterscheidet, eine Anfrage zum Verbinden des gerufenen Endgeräts mit dem zweiten Kommunikationsnetzwerk an das gerufene Endgerät zu senden, sodass sich das gerufene Endgerät mit dem zweiten Kommunikationsnetzwerk verbindet.

8. Rufendes Endgerät (30) nach Anspruch 7, wobei die erste Kommunikationskontextinformation ferner eine Information über mindestens eine in dem rufenden Endgerät installierte Kommunikationsanwendung beinhaltet.

9. Rufendes Endgerät (30) nach Anspruch 7 oder 8, wobei die zweite Kommunikationskontextinformation ferner eine Information über mindestens eine in dem gerufenen Endgerät installierte Kommunikationsanwendung beinhaltet.

10. Computerprogramm, das Programmcodeanweisungen zum Ausführen der Schritte des Verfahrens zur Herstellung einer Kommunikation nach einem der Ansprüche 1 bis 6 beinhaltet, wenn das Programm von einem Prozessor ausgeführt wird.

## Claims

1. Method for establishing a communication between at least one caller terminal (T1) and a called terminal (T2), comprising:
• a step for detection (E206) by the caller terminal of a user interaction requesting the establishment of a communication with the called terminal,
• a step for obtaining (E200) a first piece of communication context information relating to the caller terminal, said first piece of communication context information comprising information on connectivity of the caller terminal,
• a step for obtaining (E2083) at least a second piece of communication context information relating to the called terminal, said second piece of communication context information comprising information on connectivity of the called terminal,
• a step for determining (E212) a communication service to be used for establishing said requested communication with the called terminal, the determination being carried out based on at least the first piece of communication context information and the second piece of communication context information,
• a step for sending (E216), to the called terminal, a communication request according to the communication service determined,
the method comprising, when the called terminal is connected to a third communications network which is different from a second communications network over which the communication service determined is implemented, a step for sending, by the caller terminal, for the attention of the called terminal, a request for connection of the called terminal to the second communications network, such that the called terminal connects to the second communications network.

2. Method for establishing a communication according to Claim 1, **characterized in that**, when at least two communication services can be implemented between the caller terminal and the called terminal, the determination step selects, from amongst said communication services, a communication service supplying the best quality of service.

3. Method for establishing a communication according to either one of Claims 1 and 2, **characterized in that** when the caller terminal is connected to a first communications network which is different from a second communications network over which the communication service determined is implemented, it comprises a step for connection of the caller terminal to the second communications network.

4. Method for establishing a communication according to any one of Claims 1 to 3, **characterized in that** when the request for establishing a communication is carried out for at least two modes of communication, the communication context information relating to the caller terminal comprises information relating to a history of communications previously established between the caller terminal and the called terminal, referred to as history information, and **in that** the method comprises a step for determining a mode of communication as a function of said history information, the communication service being determined for the mode of communication determined.

5. Method for establishing a communication according to any one of Claims 1 to 4, wherein said first piece of communication context information furthermore comprises a piece of information on at least one communication application installed on the caller terminal.

6. Method for establishing a communication according to any one of Claims 1 to 5, wherein said second piece of communication context information furthermore comprises a piece of information on at least one communication application installed on the called terminal.

7. Terminal (30), referred to as caller terminal, designed to establish a communication with a called terminal, comprising:
• a user interface (INT) designed to detect a user interaction requesting the establishment of a communication with the called terminal,
• a processing module (31) designed to:
▪ obtain a first piece of communication context information, said first piece of communication context information corresponding to information on connectivity of the caller terminal relating to communication networks to which the terminal is connected and to communication networks to which the terminal is capable of connecting,
▪ obtain a second piece of communication context information, said second piece of communication context information corresponding to information on connectivity of the called terminal relating to communication networks to which the terminal is connected and to communication networks to which the terminal is capable of connecting,
▪ determine, based on at least the first piece of communication context information and the second piece of communication context information, a communication service to be used for establishing a communication requested via the user interface,
• a communications module (COM) designed to:
▪ send, to the called terminal, a communication request according to the communication service determined,
the processing module being designed to send, for the attention of the called terminal, when the called terminal is connected to a third communications network which is different from a second communications network over which the communication service determined is implemented, a request for connection of the called terminal to the second communications network, such that the called terminal connects to the second communications network.

8. Caller terminal (30) according to Claim 7, wherein said first piece of communication context information furthermore comprises a piece of information on at least one communication application installed on the caller terminal.

9. Caller terminal (30) according to Claim 7 or 8, wherein said second piece of communication context information furthermore comprises a piece of information on at least one communication application installed on the called terminal.

10. Computer program comprising program code instructions for the execution of the steps of the method for establishing a communication according to any one of Claims 1 to 6, when the program is executed by a processor.
